# EUROPÄISCHE PATENTANMELDUNG

(11) **EP 3 412 604 A1**
(43) Veröffentlichungstag der Anmeldung: **12.12.2018**
(21) Anmeldenummer: 18156029.3
(22) Anmeldetag: 09.02.2018
(51) Int. Cl.: B65G 43/10, B65G 23/32, B65G 43/00, B65G 43/04

(54) **ANTRIEBSYSTEM FÜR EINEN GURTFÖRDERER, VERFAHREN ZUM ANTREIBEN EINES GURTFÖRDERERS, GURTFÖRDERER, STEUEREINRICHTUNG UND COMPUTERPROGRAMMPRODUKT**

(30) Priorität: 06.06.2017 EP 17174585
(71) Anmelder: Siemens Aktiengesellschaft, 80333 München (DE)
(72) Erfinder: HELLMUTH, Torsten, 91058 Erlangen (DE); MÄCHLER, Peter, 91301 Forchheim (DE); TALJAARD, Pieter, 4122 Mansfield / QLD (AU)

(57) **Zusammenfassung**

Zusammenfassend betrifft die Erfindung ein Antriebsystem für einen Gurtförderer, ein Verfahren zum Antreiben eines Gurtförderers (2) sowie einen Gurtförderer (2) mit einem solchen Antrieb. Zudem betrifft die Erfindung ein Computerprogrammprodukt und eine Steuereinrichtung (9, 9a, 9b). Der Gurtförderer (2) umfasst einen Gurt (1), der von zwei Gurttrommeln (3a, 3b) geführt wird und Tragrollen (4a, 4b). Neben der jeweiligen Gurttrommel (3a, 3b) werden zumindest ein Teil der Tragrollen (4a, 4b) mit jeweils einem Motor (5, 5a) angetrieben. Der dezentrale Antrieb des Gurtes (1) senkt dessen Belastung (B). Der jeweilige Motor (5, 5a) dient zur Bewegung des Gurtes (1), wobei der jeweilige Motor (5, 5a) jeweils eine Drehzahl (w) und ein Drehmoment (D) zum Antrieb des Gurtes (1) auf den Gurt (1) übertragen. Durch eine Regelung der jeweiligen Drehzahl (w) und/oder des jeweiligen Drehmomentes (D) kann die Belastung (B) des Gurtes (1) weiter reduziert werden. Vorzugsweise dient eine kraftschlüssige Verbindung des Gurtes (1) mit der jeweiligen Tragrolle (4a) und/oder jeweiligen Gurttrommel (3a) zum Übertrag von kinetischer Energie vom jeweiligen Motor (5, 5a) zum Gurt (1) und zurück.

## Beschreibung

Die Erfindung betrifft ein Antriebsystem für einen Gurtförderer, ein Verfahren zum Antreiben eines Gurtförderers, einen Gurtförderer, eine Steuereinrichtung und ein Computerprogrammprodukt.

Gurtförderer umfassen in der Regel einen Gurt, der zur Beladung mit einen Fördergut, insbesondere Schüttgut, vorgesehen ist. Der Gurt wird mit Hilfe einer oder mehreren angetriebenen Gurttrommeln geführt. Der Gurt wird um mindestens zwei Gurttrommeln gespannt. Ein Gurtförderer weist neben den Gurttrommeln in der Regel Tragrollen auf, die den Gurt in vertikaler Richtung unterstützen. Gurtförderer werden auch als Förderbandanlagen oder Gurtfördereranlagen bezeichnet. Insbesondere im industriellen Umfeld oder im Bergbau sowie in der Grundstoffindustrie finden Gurtförderer Einsatz.

Ein Gurt für einen Gurtförderer ist in der Regel sehr teuer. Nachteilhaft reduziert eine starke Belastung die Lebensdauer des Gurtes.

DE 10 2012 102 945 A1 beschreibt einen Schüttgutförderer, wobei der Schüttgutförderer Tragrollen für einen Gurt aufweist und diese Tragrollen angetrieben sind.

DE 10 2014 107 591 A1 beschreibt weiter eine Fördererbandanlage mit dezentralem Fördererbandantrieb und ein Verfahren zum Betrieb einer solchen.

Es ist Aufgabe der Erfindung, den Gurt eines Gurtförderers zu entlasten. Insbesondere ist es Aufgabe der Erfindung, einen verbesserten Antrieb für einen Gurtförderer bereitzustellen.

Die Aufgabe wird durch ein Antriebsystem nach Anspruch 1 gelöst.

Die Aufgabe wird weiter durch ein Verfahren nach Anspruch 9 sowie durch einen Gurtförderer gemäß Anspruch 13 gelöst.

Die Aufgabe wird weiter durch ein Computerprogrammprodukt gemäß Anspruch 14 und durch eine Steuereinrichtung gemäß Anspruch 15 gelöst.

Vorteilhafte Ausgestaltungen der Erfindung sind jeweils Gegenstand der abhängigen Patentansprüche.

Vorteilhaft wird der Gurt des Gurtförderers durch den Einsatz der Erfindung entlastet.

Eine Möglichkeit, um die Belastung des Gurtes zu reduzieren, ist es, die erforderliche Antriebsleistung an mehreren Stellen auf den Gurt zu übertragen.

Eine Idee der Erfindung ist es, einen Antrieb oder mehrere Antriebe dezentraler Art für einen Gurtförderer bereitzustellen. Ein solcher Antrieb umfasst einen Motor, der den Gurt antreibt. Der Gurtförderer umfasst in der Regel eine Mehrzahl von Tragrollen, wobei zumindest ein Teil der Tragrollen jeweils mit Hilfe jeweils eines Motors angetrieben werden. Die von dem jeweiligen Motor angetriebenen Tragrollen werden als angetriebene Tragrollen bezeichnet. Der jeweilige Motor wird mit Hilfe einer Steuereinrichtung sowie optional durch eine übergeordnete Steuereinrichtung und/oder einer jeweils dem jeweiligen Antrieb zugeordneten Steuereinrichtung gesteuert oder geregelt. Die jeweilige Steuereinrichtung dient zur Steuerung oder Regelung des jeweiligen Drehmoments und/oder der jeweiligen Drehzahl des jeweiligen Motors. Die angetriebene Tragrolle sowie die Gurttrommel dienen zu einem Kraftübertrag auf den Gurt um den Gurt zu bewegen. Der Kraftübertrag erfolgt hier vorteilhaft an mehreren Berührungspunkten. Ein Berührungspunkt ist der Bereich des Gurtes, der von einer Mantelfläche der Tragrolle oder der Mantelfläche der Gurttrommel beaufschlagt wird.

Durch eine Steuerung oder Regelung der Drehzahl und/oder des Drehmoments des jeweiligen Motors kann die Drehbewegung der jeweiligen Gurttrommel oder Tragrolle an die Geschwindigkeit des Gurtes angepasst werden, so dass die Geschwindigkeit des Gurtes mit einer Tangentialgeschwindigkeit der jeweiligen Tragrolle und/oder der Tangentialgeschwindigkeit der jeweiligen Gurttrommel übereinstimmt oder zumindest im Wesentlichen übereinstimmt.

Vorzugsweise werden das jeweilige Drehmoment und/oder die jeweilige Drehzahl des jeweiligen Antriebs so geregelt,
- dass die Belastung des Gurtes möglichst gering ausfällt,
- dass eine Überlastung einzelner Antriebe vermieden wird,
- und/oder dass die Tangentialgeschwindigkeit der jeweiligen Gurttrommel oder der jeweiligen Tragrolle mit der Geschwindigkeit des Gurtes jeweils an derjenigen Position übereinstimmt, an der die jeweilige Gurttrommel oder Tragrolle durch den Gurt beaufschlagt werden.

Das Angleichen der jeweiligen Tangentialgeschwindigkeiten der jeweiligen Tragrolle und/oder der jeweiligen Gurttrommel an die Geschwindigkeit des Gurtes erfolgt vorteilhaft durch eine Steuerung oder Regelung der jeweiligen Drehzahl des jeweiligen Motors.

Vorteilhaft gibt zumindest eine Gurttrommel, die mit einem Motor gekoppelt ist, die Geschwindigkeit des Gurtes vor. Durch die jeweils angetriebenen Tragrollen kann der Gurt sowie der Motor für die jeweilige Gurttrommel vorteilhaft entlastet werden. Überdies ist eine Regelung der Drehzahl und/oder des jeweiligen Drehmoments der Tragrollen vorteilhaft vereinfacht.

Die Übereinstimmung der Tangentialgeschwindigkeit (der jeweiligen Mantelfläche) der jeweiligen Tragrolle und/oder der jeweiligen Gurttrommel mit der Geschwindigkeit des Gurtes dient insbesondere zur Verminderung der Belastung des Gurtes durch Materialabrieb.

Mit der Erfindung ist es möglich, einen bestehenden Gurtförderer in der Länge zu erweitern. Hierzu kann der Gurt des Gurtförderers an einer Stelle aufgetrennt werden. Zwischen den Enden des Gurtes kann ein Zwischenstück eingebracht werden. Danach werden die neuen Enden des Gurtes wieder zu einem verlängerten Gurt zusammengefügt. Bei einer Erweiterung der Länge des Gurtförderers werden in der Regel Tragrollen eingefügt. Eine Verlängerung des Gurtförderers führt zu einer hohen Gurtbelastung und/oder einem erhöhten Bedarf an Antriebsleistung. Vorteilhaft können angetriebene Tragrollen zur Übertragung von Bewegungsenergie auf den Gurt vorgesehen sein, wobei die angetriebenen Tragrollen dem Gurtförderer zugeordnet werden. Die Gurtbelastung wird durch die angetriebenen Tragrollen verringert.

Das Antriebsystem für einen Gurtförderer weist eine Mehrzahl von Motoren und eine Steuereinrichtung auf, wobei die Steuereinrichtung zur Bereitstellung von jeweils einer Drehzahl und/oder jeweils einem Drehmoment für den jeweiligen Motor ausgebildet ist, wobei der jeweilige Motor zur Drehung einer angetriebenen Gurttrommel oder einer angetriebenen Tragrolle und somit zum Antrieb des Gurtes mit einer Geschwindigkeit vorgesehen ist, wobei die Steuereinrichtung zur Steuerung oder Regelung des jeweiligen Drehmoments und/oder der jeweiligen Drehzahl des jeweiligen Motors derart ausgebildet ist,
- so dass eine Tangentialgeschwindigkeit der jeweilig angetriebenen Tragrolle und/oder der jeweilig angetriebenen Gurttrommel der Geschwindigkeit des Gurtes der Position entspricht, bei dem die jeweils angetriebene Gurttrommel oder die jeweils angetriebene Tragrolle den Gurt beaufschlagen
- und/oder so dass zwischen der jeweilig angetriebenen Tragrolle und/oder der jeweilig angetriebenen Gurttrommel und dem Gurt eine kraftschlüssige Verbindung besteht.

Zusätzlich oder alternativ dient die Steuerung oder die Regelung der jeweiligen Drehzahl und/oder des jeweiligen Drehmoments des jeweiligen Motors zu einer jeweils kraftschlüssigen Verbindung des Gurtes mit der jeweiligen Tragrolle und/oder der jeweiligen Gurttrommel.

Unter einer kraftschlüssigen Verbindung zwischen der jeweiligen Gurttrommel oder der jeweiligen Tragrolle mit dem Gurt wird die kraftschlüssige Verbindung zwischen der jeweiligen Mantelfläche und der zu der jeweiligen Mantelfläche zeigenden Gurtseite verstanden.

Der Antrieb der jeweiligen Gurttrommel wird auch als Hauptantrieb bezeichnet. Der Motor für die jeweilige Gurttrommel ist vorteilhaft leistungsfähiger als der jeweilige Motor für die Tragrollen ausgestaltet.

Die Gurttrommeln sind insbesondere dafür vorgesehen, den Gurt zu führen und umzulenken.

Eine oder mehrere Tragrollen sind vorteilhaft zwischen den Gurttrommeln angeordnet. Die jeweilige Tragrolle dient zur Unterstützung des Gurtes sowie des sich auf dem Gurt befindlichen Fördergutes. Die Tragrollen verringern ein Durchhängen des Gurtes.

Die Position, bei der die Gurttrommel oder die jeweilige Tragrolle den Gurt beaufschlagen wird hier auch als Berührungspunkt bezeichnet.

Die Tangentialgeschwindigkeit ist die Geschwindigkeit, welche die Tragrolle oder die Gurttrommel an ihrer jeweiligen Mantelfläche aufweist.

Eine Gurttrommel oder eine Tragrolle sind vorteilhaft mit jeweils einem Motor gekoppelt. Der Motor dient insbesondere zum Antrieb der jeweiligen Gurttrommel oder der jeweiligen Tragrolle. Mit der Gurttrommel und/oder der Tragrolle wird der Gurt angetrieben. Der Antrieb erfolgt durch die Kraftübertragung der Gurttrommel bzw. der Tragrolle auf den Gurt.

Vorzugsweise dient die Steuereinrichtung zur Steuerung oder Regelung der Drehzahl und/oder des Drehmoments des jeweiligen Motors.

Eine Steuerung oder Regelung der Drehzahl oder des Drehmoments des jeweiligen Motors erfolgt vorzugsweise derart, dass die Tangentialgeschwindigkeit der jeweiligen Gurttrommel und/oder der jeweiligen Tragrolle der Geschwindigkeit des Gurtes an der Position der jeweiligen Gurttrommel oder der jeweiligen Tragrolle entspricht.

Im Falle einer durch die jeweilige Gurttrommel vorgegebenen Geschwindigkeit des Gurtes dient die Steuereinrichtung zur Steuerung oder Regelung des jeweilig der Tragrolle zugeordneten Motors. Hierbei steuert oder regelt die Steuereinrichtung die Drehzahl und/oder das Drehmoment des jeweilig der Tragrolle zugeordneten Motors.

Vorzugsweise erfolgt eine Steuerung oder Regelung des jeweiligen Motors derart, dass die jeweilige Tangentialgeschwindigkeit der Tragrolle nicht geringer ist als die Geschwindigkeit des Gurtes an der jeweiligen Stelle, bei der der Gurt auf der jeweiligen Tragrolle aufliegt.

Weiter vorteilhaft erfolgt die Steuerung oder Regelung des jeweiligen Drehmoments des jeweiligen Motors für die jeweilige Tragrolle derart, dass eine kraftschlüssige Verbindung zwischen der Mantelfläche der jeweiligen Tragrolle und des Gurtes besteht.

Vorteilhaft entspricht die Dauer für die kraftschlüssige Verbindung im Wesentlichen der Betriebszeit des Gurtförderers.

Eine solche Regelung ermöglicht vorteilhaft eine besonders effiziente Übertragung einer Antriebsleistung zwischen dem jeweiligen Motor über die Tragrolle und/oder über die jeweilige Gurttrommel zum Gurt.

Eine Steuerung oder Regelung der jeweiligen Drehzahl und/oder des jeweiligen Drehmoments des jeweiligen Motors erfolgt vorzugsweise so, dass kein Schlupf zwischen der Mantelfläche der jeweiligen Gurttrommel oder der jeweiligen Tragrolle und dem Gurt auftritt.

Die Erfindung führt vorteilhaft zu einer Reduktion der Zugbelastung des Gurtes. Weiter vorteilhaft wird eine Überlastung einzelner Motoren, insbesondere des Motors des Hauptantriebs, vermieden.

Bei einer vorteilhaften Ausgestaltung der Erfindung dienen zumindest ein Geber zur Bestimmung der Geschwindigkeit des Gurtes und/oder zumindest ein weiterer Geber zur Bestimmung der jeweiligen Tangentialgeschwindigkeit der Tragrolle, insbesondere der angetriebenen Tragrolle.

Der zumindest eine Geber dient vorzugsweise zur Bestimmung der Geschwindigkeit des Gurtes an einer vorbestimmten Position. Die ermittelte Geschwindigkeit des Gurtes kann der Steuereinrichtung und/oder dem jeweiligen Frequenzumrichter bereitgestellt werden. Die Steuereinrichtung kann insbesondere in dem Frequenzumrichter integriert sein. Der Geber kann überdies der jeweiligen Gurttrommel zugeordnet sein.

Der jeweilige Durchmesser der Tragrolle oder der jeweiligen Gurttrommel kann in einer ersten Näherung als konstant angenommen werden. Demnach kann anhand der Drehzahl des Motors, die von dem jeweiligen weiteren Geber bestimmt wird, die Tangentialgeschwindigkeit einfach berechnet werden.

Der Geber und/oder der weitere Geber sind vorzugsweise mit der Steuereinrichtung und/oder mit einem Frequenzumrichter verbunden. Der jeweilige Geber oder der jeweilige weitere Geber stellen jeweils Ist-Werte der Geschwindigkeit, Ist-Werte der jeweiligen Drehzahl und/oder Ist-Werte für die jeweilige Tangentialgeschwindigkeit bereit. Die Bereitstellung erfolgt jeweils für einen Regelkreis. Der jeweilige Regelkreis ist vorteilhaft in der Steuereinrichtung und/oder in dem jeweiligen Frequenzumrichter angeordnet. Der Regelkreis dient zur Regelung der jeweiligen Drehzahl, des jeweiligen Drehmoments und/oder des jeweiligen Stroms für den jeweiligen Motor. Alternativ oder zusätzlich regelt der Regelkreis die Geschwindigkeit des Gurtes. Vorteilhaft ist der jeweilige Regelkreis als PID-Regelkreis ausgebildet.

Insbesondere bei langen Gurtförderern ist der Einsatz von mehreren Gebern zur Bestimmung der Geschwindigkeit des Gurtes vorteilhaft. Die Mehrzahl an Gebern kann unterschiedliche Geschwindigkeiten des Gurtes an verschiedenen Positionen ermitteln. Unterschiedliche Geschwindigkeiten des Gurtes können auf Verschleiß von Tragrollen oder auf eine hohe Belastung des Gurtes hinweisen. Zudem können unterschiedliche Geschwindigkeiten auf Schwingungen des Gurtes, insbesondere auf longitudinale Schwingungen des Gurtes, hindeuten.

Durch die Erfassung unterschiedlicher Ist-Werte der Geschwindigkeit für eine Mehrzahl von Positionen kann vorteilhaft die Genauigkeit des jeweiligen Regelkreises erhöht werden.

Alternativ oder zusätzlich können Ist-Werte der jeweiligen Drehzahl des jeweiligen Motors auch durch den jeweils dem Motor zugeordneten Frequenzumrichter bereitgestellt werden.

Durch den Einsatz eines Gebers kann die Steuerung oder die Regelung des Drehmoments und/oder der Drehzahl des jeweiligen Motors verbessert werden.

Bei einer weiteren vorteilhaften Ausgestaltung der Erfindung regelt der Regelkreis die Drehzahl und das Drehmoment des jeweiligen Motors derart, dass eine Belastung des Gurtes unterhalb einer Maximalbelastung, insbesondere einer zulässigen Maximalbelastung, bleibt.

Die (zulässige) Maximalbelastung kann sich aus den Eigenschaften des Gurtes, wie
- der Festigkeit des Gurtes,
- dem Elastizitätsmodul des Gurtes,
- dem Alter des Gurtes und/oder
- der momentanen oder durchschnittlichen Beladung des Gurtes mit Fördergut ergeben.

Insbesondere ergibt sich die Maximalbelastung als eine zulässige Maximalbelastung anhand geltender Normen und Richtlinien. In der Regel betreffen die Normen und Richtlinien den jeweiligen Gurtförderer in dem jeweiligen Land, in dem der Gurtförderer eingesetzt wird.

Die Regelung der jeweiligen Drehzahl und/oder des jeweiligen Drehmoments des jeweiligen Motors erfolgt vorteilhaft derart, dass die jeweilige Tangentialgeschwindigkeit der jeweiligen Tragrolle der Geschwindigkeit des Gurtes nachgeführt wird.

Dem Gurtförderer sind vorteilhaft mehrere Geber zugeordnet, um die Geschwindigkeit des Gurtes an mehreren Stellen zu bestimmen.

Ein Einhalten der Maximalbelastung fördert eine lange Lebensdauer des Gurtes.

Bei einer weiteren vorteilhaften Ausgestaltung der Erfindung ist dem jeweiligen Motor ein Frequenzumrichter zugeordnet, wobei optional der jeweilige Frequenzumrichter einen Regelkreis umfasst.

Zur Bereitstellung der Drehzahl oder der Tangentialgeschwindigkeit der jeweiligen Gurttrommel oder der jeweiligen Tragrolle dient vorzugsweise ein Synchronmotor oder ein Asynchronmotor. Diesen Motoren ist in der Regel ein Frequenzumrichter zugeordnet. Der Frequenzumrichter weist vorzugsweise einen Regelkreis für das Drehmoment, für die Drehzahl und/oder für den jeweiligen Motorstrom auf.

Der Regelkreis bzw. die Steuereinrichtung dient zur Sicherung der kraftschlüssigen Verbindung zwischen dem Gurt und der jeweils angetriebenen Gurttrommel oder der jeweils angetriebenen Tragrolle.

Durch die kraftschlüssige Verbindung wird der Schlupf zwischen der Gurttrommel und dem Gurt sowie der Schlupf zwischen der jeweiligen angetriebenen Tragrolle und dem Gurt verhindert.

Der Regelkreis dient vorteilhaft zur Verbesserung der Übertragung der Antriebsleistung von der jeweiligen Tragrolle und/oder der jeweiligen Gurttrommel auf den Gurt.

In einer weiteren vorteilhaften Ausgestaltung der Erfindung dient die Gurttrommel zur Vorgabe der Geschwindigkeit des Gurtes.

Die Geschwindigkeit des Gurtes wird vorteilhaft durch die vorgegebene Drehzahl desjenigen Motors festgelegt, der mit der jeweiligen Gurttrommel gekoppelt ist. Der Motor, der die jeweilige Gurttrommel antreibt, wird auch als Motor eines Hauptantriebs bezeichnet. Der Hauptantrieb ist hierbei besonders leistungsfähig ausgebildet.

Durch die Vorgabe der Geschwindigkeit des Gurtes wird die Regelung der jeweiligen Drehzahl und/oder des jeweiligen Drehmoments der Motoren, die zum Antrieb der jeweiligen Tragrolle dient, vereinfacht.

Die vorgegebene Geschwindigkeit durch den Gurt kann als ein Sollwert für den jeweiligen Regelkreis und/oder dem jeweiligen Frequenzumrichter desjenigen Motors bereitgestellt werden, der für den Antrieb der jeweiligen Tragrolle dient.

Durch die Vereinfachung der Regelung wird der jeweilige Regelkreis entlastet und die Geschwindigkeit der Regelung erhöht.

Die Vorgabe einer Soll-Drehzahl für die jeweilige Tragrolle durch die vorgegebene Geschwindigkeit des Gurtes dient vorteilhaft zur Vereinfachung der Steuerung bzw. Regelung der jeweiligen Motoren für die Tragrollen.

Die Steuereinrichtung dient vorteilhaft zur Steuerung oder Regelung der jeweiligen Drehzahl und/oder des jeweiligen Drehmoments derjenigen Motoren, die jeweils einer Tragrolle zugeordnet ist.

Vorteilhaft erfolgt die Steuerung oder Regelung der jeweiligen Drehzahl und/oder des jeweiligen Drehmoments derart, dass die Geschwindigkeit des Gurtes über die Länge des Gurtes hinweg konstant ist.

Durch die Steuerung oder Regelung der Drehzahl und/oder des Drehmomentes der Motoren für die Tragrollen wird der Gurt vorteilhaft entlastet.

In einer vorteilhaften Ausgestaltung der Erfindung ist die jeweilige Tragrolle über eine Freilaufkupplung mit dem jeweiligen Motor gekoppelt.

Eine Freilaufkupplung dient zum Loslösen der Verbindung zwischen dem jeweiligen Motor und der jeweils zugeordneten Gurttrommel oder Tragrolle. Das Loslösen erfolgt insbesondere dann, wenn die Drehzahl der Tragrolle oder der Gurttrommel größer ist, als die Drehzahl des Motors.

Alternativ zur Freilaufkupplung können die Steuereinrichtung und/oder der Frequenzumrichter derart ausgebildet sein, dass der Gurt durch die jeweilige Tragrolle und/oder durch die jeweilige Gurttrommel in seiner Geschwindigkeit erhöht wird.

Durch den Einsatz der jeweiligen Freilaufkupplung kann ein Materialabrieb des Gurtes selbst dann verhindert werden, falls einer der Motoren ausfällt.

Die Freilaufkupplung trägt vorteilhaft zur Aufrechterhaltung der kraftschlüssigen Verbindung zwischen der Tragrolle und dem Gurt bei.

Die jeweilige kraftschlüssige Verbindung zwischen der jeweiligen Tragrolle und der jeweiligen Gurttrommel und dem Gurt dient zur Verminderung des Materialabriebs des Gurtes.

Alternativ oder zusätzlich zur Verwendung der Freilaufkupplung kann die Verbindung zwischen dem jeweiligen Motor und der jeweiligen Tragrolle oder der jeweiligen Gurttrommel drehfest, insbesondere über einen Drehmomentwandler oder über eine Kupplung, vorzugsweise eine elastische Kupplung, ausgebildet sein.

Bei einer drehfesten Verbindung des jeweiligen Motors mit der jeweiligen Tragrolle kann der jeweilige Motor bei einer Abnahme der Geschwindigkeit des Gurtes auch als Generator eingesetzt werden. Durch den Einsatz des jeweiligen Motors, insbesondere in Verbindung mit einem jeweils zugeordneten Frequenzumrichter, wird ein Teil der Energie wieder rückgewinnbar.

Je nach Ausgestaltung des Motors und einer wechselnden Beladung des Gurtes kann ein Getriebe zwischen dem jeweiligen Motor und der jeweils zugeordneten Tragrolle oder der jeweils zugeordneten Gurttrommel vorgesehen sein. Das Getriebe dient zur Änderung der Drehzahl und dem Drehmoment des Motors.

In einer weiteren vorteilhaften Ausgestaltung der Erfindung ist zwischen dem jeweiligen Motor und der jeweiligen Tragrolle und/oder der jeweiligen Gurttrommel ein Drehmomentwandler, insbesondere ein Getriebe, angeordnet.

Durch den Einsatz eines Drehmomentwandlers, beispielhaft durch ein Getriebe, wird vorzugsweise die jeweilige Drehzahl des jeweiligen Motors herabgesetzt.

Durch den Einsatz eines Drehmomentwandlers, insbesondere einem Getriebe, kann das Drehmoment an der jeweiligen Tragrolle erhöht werden. Somit kann der jeweilige Motor, der mit dem Drehmomentwandler gekoppelte ist, in einem für ihn günstigen Drehzahlbereich betrieben werden.

In einer weiteren vorteilhaften Ausgestaltung der Erfindung weist der Antrieb eine Mehrzahl von Steuereinrichtungen auf, wobei die Steuereinrichtungen jeweils durch eine technische Datenverbindung miteinander verbunden sind.

Die Steuereinrichtungen, welche zur Steuerung oder Regelung des Drehmoments und/oder der Drehzahl des jeweiligen Motors ausgebildet sind, werden hier auch als antriebsnahe Steuereinrichtungen bezeichnet. Die antriebsnahen Steuereinrichtungen können jeweils mit einer übergeordneten Steuereinrichtung verbunden sein.

Bevorzugt dient die jeweilige antriebsnahe Steuereinrichtung zur Steuerung oder Regelung desjenigen Motors, der mit der jeweiligen Tragrolle gekoppelt ist.

Vorzugsweise dient die übergeordnete Steuereinrichtung zur Steuerung oder Regelung der antriebsnahen Steuereinrichtung und/oder zur Steuerung oder Regelung des Hauptantriebs. Der Hauptantrieb dient vorzugsweise zum Antrieb der jeweiligen Gurttrommel. Der Hauptantrieb dient vorzugsweise zur Bereitstellung der vorgegebenen Geschwindigkeit des Gurtes.

Vorteilhaft dient die jeweilige antriebsnahe Steuereinrichtung zur Steuerung oder Regelung desjenigen Motors, welcher jeweils einer Tragrolle zugeordnet ist. Der jeweiligen antriebsnahen Steuerung und/oder dem jeweiligen Regelkreis kann die vorgegebene Geschwindigkeit des Gurtes als Soll-Wert bereitgestellt werden. Der jeweilige Geber oder der jeweilige weitere Geber dient vorzugsweise zur Ermittlung des Ist-Wertes der Geschwindigkeit. Anhand der jeweiligen Differenz zwischen dem jeweiligen Soll-Wert und dem entsprechenden Ist-Wert der Geschwindigkeit erfolgt eine Änderung der Drehzahl des jeweiligen Motors, der mit der jeweiligen Tragrolle gekoppelt ist.

Bei einer Abweichung des Ist-Wertes der Geschwindigkeit bei der Position der jeweiligen Tragrolle dient die Tragrolle vorzugsweise zum Ausgleich der Geschwindigkeit des Gurtes an der Position der Tragrolle.

Bei einer Abweichung von Ist-Wert zu Soll-Wert der Geschwindigkeit des Gurtes an der Position der jeweiligen angetriebenen Tragrolle wird die Drehzahl der Tragrolle (Ist-Wert) einem Soll-Wert der Drehzahl und/oder des Drehmoments angepasst. Die Anpassung erfolgt zum Erhalt der kraftschlüssigen Verbindung der jeweiligen Tragrolle und dem Gurt. Durch die jeweilige kraftschlüssige Verbindung zwischen Gurt und der jeweiligen Tragrolle wird ein Kraftübertrag zwischen Tragrolle und Gurt befördert.

Durch die Regelung des jeweiligen Motors wird der Schlupf zwischen der Tragrolle und dem Gurt vermindert.

Die jeweilige antriebsnahe Steuereinrichtung dient zur Steuerung der Drehzahl und/oder des Drehmoments des jeweiligen Motors.

Die jeweilig antriebsnahen Steuereinrichtungen sind vorzugsweise selbst durch eine technische Datenverbindung miteinander verbunden.

Durch die technische Datenverbindung können Signale bezüglich der jeweiligen Drehzahl oder des jeweiligen Drehmoments übertragen werden. Weiter kann die technische Datenverbindung zur Übertragung der ermittelten Geschwindigkeit des Gurtes, insbesondere an verschiedenen Positionen des Gurtes, an die jeweilige Steuereinrichtung vorgesehen sein.

Vorteilhaft wird die Geschwindigkeit des Gurtes, welche durch die jeweilige Gurttrommel vorgegeben ist, der jeweiligen Steuereinrichtung bereitgestellt. Die jeweilige Steuereinrichtung kann in diesem Fall den jeweilig der Tragrolle zugeordneten Motor derart steuern oder regeln, dass die Geschwindigkeit an der Position der jeweiligen Tragrolle der bereitgestellten Geschwindigkeit des Gurtes entspricht.

Dadurch können vorteilhaft positionsabhängige Differenzen der Geschwindigkeit des Gurtes ausgeglichen werden und die Belastung des Gurtes wird vorteilhaft verringert.

Vorzugsweise überwacht die übergeordnete Steuereinrichtung die Signale oder Daten, die zwischen den jeweiligen antriebsnahen Steuereinrichtungen übertragen werden.

Vorzugsweise umfasst die jeweilige antriebsnahe Steuereinrichtung einen antriebsnahen Regelkreis. Der Regelkreis der antriebsnahen Steuereinrichtung dient vorzugsweise zur Regelung des jeweiligen Drehmoments, der jeweiligen Drehzahl und/oder des jeweiligen (Versorgungs-) Stroms für den jeweils zugeordneten Motor.

Vorzugsweise umfasst auch die übergeordnete Steuereinrichtung einen übergeordneten Regelkreis. Der übergeordnete Regelkreis dient vorzugsweise zur Regelung der Geschwindigkeit des Gurtes. Die übergeordnete Steuereinrichtung dient vorzugsweise auch zur Bereitstellung des Soll-Wertes der jeweiligen Geschwindigkeit an die antriebsnahen Steuereinrichtungen und/oder an den jeweiligen antriebsnahen Regelkreis.

Vorzugsweise ist durch die Kombination der jeweiligen antriebsnahen Steuereinrichtung und der übergeordneten Steuereinrichtung eine hierarchische Steuerungs- oder Regelungsstruktur aufgebaut.

Durch die jeweilige antriebsnahe Steuereinrichtung, die jeweils einem Motor zugeordnet ist, kann die Antriebsleistung für den Gurtförderer einfach erhöht werden, ohne dass ein bestehendes Antriebsystem (umfassend die jeweilige antriebsnahe Steuereinrichtungen, Frequenzumrichter und Motor) verändert werden muss.

Bei einer weiteren vorteilhaften Ausgestaltung der Erfindung ist die jeweilige Steuereinrichtung jeweils als antriebsnahe Steuereinrichtung oder als übergeordnete Steuereinrichtung ausgebildet, wobei die antriebsnahen Steuereinrichtungen jeweils mit einer übergeordneten Steuereinrichtung wirkverbunden sind.

Die Wirkverbindung der Steuereinrichtungen miteinander erfolgt vorteilhaft mit Hilfe einer technischen Datenverbindung.

Vorteilhaft wird ein Soll-Wert für die Geschwindigkeit des Gurtes mit Hilfe der übergeordneten Steuereinrichtung vorgegeben. Anhand der übergeordneten Steuereinrichtung kann der jeweilige Hauptantrieb des Gurtförderers gesteuert oder geregelt werden. Die Geschwindigkeit des Gurtes und/oder ein Soll-Wert für die Geschwindigkeit kann den antriebsnahen Steuereinrichtungen bereitgestellt werden.

Die jeweils antriebsnahe Steuereinrichtung dient vorzugsweise lediglich zur Steuerung oder Regelung des Drehmoments und/oder der Drehzahl desjenigen Motors, welcher der Tragrolle zugeordnet ist.

Die Steuerung oder Regelung der jeweiligen Drehzahl und/oder des jeweiligen Drehmoments erfolgt vorzugsweise anhand des Soll-Wertes der Geschwindigkeit des Gurtes.

Durch die hierarchisch aufgebaute Steuerung oder Regelung können vorteilhaft unterschiedliche Regelkreise und/oder unterschiedliche Regelparameter für die unterschiedlichen Regelkreise verwendet werden.

Durch den hierarchischen Aufbau der Steuerung/Regelung kann die Schnelligkeit und die Genauigkeit der Regelung verbessert werden.

Die antriebsnahen Steuereinrichtungen sind jeweils einem Frequenzumrichter und/oder einem Motor zugeordnet. Die antriebsnahen Steuereinrichtungen sind vorteilhaft zumindest zum Teil mit einem gleichen Regelkreis ausgebildet. Durch die gleichartige Ausbildung der antriebsnahen Steuereinrichtung kann der Gurtförderer einfach um weitere antriebsnahe Steuereinrichtungen erweitert werden.

Durch den hierarchischen Aufbau der Steuereinrichtung ist die Steuerung bzw. die Regelung vereinfacht.

Bei einer weiteren Ausgestaltung der Erfindung ist einer Mehrzahl der Motoren jeweils ein Frequenzumrichter zugeordnet.

In einer besonders einfachen Ausgestaltung können mehrere Tragrollen, die beispielhaft benachbart angeordnet sind, von Motoren angetrieben werden, welche mit einem gemeinsamen Frequenzumrichter verbunden sind.

Hierdurch können vorteilhaft Frequenzumrichter eingespart werden.

Bei dem Verfahren zum Antreiben eines Gurtförderers wird ein Gurt von einer Mehrzahl von Motoren angetrieben, wobei der jeweilige Motor eine Gurttrommel oder eine Tragrolle antreibt und die jeweilige Tragrolle oder Gurttrommel eine Tangentialgeschwindigkeit aufweist, wobei die Drehzahl und/oder das Drehmoment des jeweiligen Motors so gesteuert oder geregelt wird,
- dass die Tangentialgeschwindigkeit der jeweilig angetriebenen Tragrolle und/oder der jeweilig angetriebenen Gurttrommel einer Geschwindigkeit des Gurtes an einer Position entspricht, bei dem die jeweilige Gurttrommel oder die jeweilige angetriebene Tragrolle den Gurt beaufschlagen
- und/oder dass zwischen der jeweilig angetriebenen Tragrolle und/oder der jeweilig angetriebenen Gurttrommel und dem Gurt eine kraftschlüssige Verbindung besteht.

Durch das Verfahren kann die Belastung des Gurtes minimiert werden.

Vorzugsweise erfolgt bei einer Beschleunigung des Gurtes eine Steuerung oder Regelung derart, dass eine kraftschlüssige Verbindung aufrechterhalten wird. Bei einer im Wesentlichen konstanten Geschwindigkeit erfolgt vorzugsweise eine Steuerung oder Regelung der Drehzahl und/oder des Drehmoments zur Verminderung einer Relativbewegung zwischen der jeweiligen Mantelfläche und dem Gurt.

Bei dem Verfahren zum Antreiben des Gurtförderers wird ein Gurt durch eine Mehrzahl von Motoren angetrieben. Die Motoren sind jeweils Teil eines Antriebs, wobei der Antrieb einen Motor, einen Frequenzumrichter und optional eine antriebsnahe Steuereinrichtung umfasst. Zusätzlich kann der jeweilige Antrieb einen oder mehrere Drehmomentwandler, insbesondere Getriebe, und/oder jeweils eine Freilaufkupplung umfassen.

Eine kraftschlüssige Verbindung zwischen der Mantelfläche der jeweiligen Tragrolle und dem Gurt und/oder der jeweiligen Gurttrommel und dem Gurt liegt vor, falls keine Relativbewegung zwischen Gurt und der jeweiligen Mantelfläche auftritt.

Durch das Verfahren kann die Belastung des Gurtes minimiert werden. Insbesondere wird durch die Vermeidung einer Relativbewegung zwischen Gurt und der jeweiligen Mantelfläche der (Material-) Abrieb des Gurtes minimiert.

Durch das Verfahren wird vorteilhaft dezentral Kraft bzw. Bewegungsenergie auf den Gurt übertragen. So wird die Belastung des Gurtes reduziert.

Der Antrieb des Gurtes erfolgt vorzugsweise dezentral. Durch die angetriebenen Tragrollen ist der Antrieb dezentral. Insbesondere durch das dezentral ausgestaltete Antriebsystem für den Gurt ist der Gurtförderer einfach in der Länge erweiterbar.

Der jeweilige Regelkreis dient dazu, dass der jeweilige Ist-Wert der Geschwindigkeit und/oder dem Drehmoment der Mantelfläche dem Soll-Wert der Geschwindigkeit des Gurtes entspricht.

Durch den jeweiligen Regelkreis wird die kraftschlüssige Verbindung zwischen der jeweiligen Tangentialfläche und dem Gurt während dem Betrieb des Gurtförderers vorteilhaft aufrecht erhalten.

Durch den Einsatz des jeweiligen Regelkreises kann der Schlupf zwischen der jeweiligen Mantelfläche und dem Gurt reduziert werden. Im Falle einer kraftschlüssigen Verbindung zwischen der jeweiligen Mantelfläche und dem Gurt erfolgt vorzugsweise keine Relativbewegung zwischen der jeweiligen Mantelfläche und dem Gurt.

Unter dem Kraftübertrag von der Tragrolle auf den Gurt wird die jeweils kraftschlüssig übertragene Kraft von der jeweiligen Mantelfläche auf den Gurt verstanden.

Eine Aufteilung auf Kraftübertragung von der jeweiligen Mantelfläche und dem Gurt auf eine Mehrzahl von Berührungspunkten, dient zur Verminderung der lokalen Gurtzugkraft. Durch die Verminderung der lokalen Gurtzugkraft wird die Maximalbelastung des Gurtes vermindert.

Die Verteilung der Berührungspunkte zur Übertragung der Kraft auf den Gurt erfolgt vorzugsweise über die gesamte Länge des Gurtes. Alternativ kann eine Verteilung der Berührungspunkte auf einen begrenzten Abschnitt des Gurtförderers erfolgen. Bei einer weiteren vorteilhaften Ausgestaltung der Erfindung bleibt die jeweils kraftschlüssige Verbindung zwischen der Gurttrommel und/oder der Tragrolle und dem Gurt nach einem Beschleunigungsvorgang des Gurtes erhalten.

Vorteilhaft erfolgt während des gesamten Betriebes des Gurtförderers keine Unterbrechung des Kraftübertrags zwischen der jeweiligen Gurttrommel und/oder der jeweiligen Tragrolle und dem Gurt.

Die kraftschlüssige Verbindung bleibt vorzugsweise bei einer konstanten Geschwindigkeit des Gurtes erhalten. Bei einer kraftschlüssigen Verbindung kann ein besonders hoher Kraftübertrag zum Gurt hin erfolgen. In dem Beschleunigungsvorgang des Gurtes bleibt vorteilhaft die kraftschlüssige Verbindung zumindest im Wesentlichen erhalten.

Der Beschleunigungsvorgang umfasst vorteilhaft die Zeitdauer, bis sich (nach einer Änderung der Geschwindigkeit) die Geschwindigkeit des Gurtes auf einen im Wesentlichen konstanten Wert eingestellt hat. Die kraftschlüssige Verbindung bleibt vorzugsweise über die Betriebsdauer des Gurtförderers erhalten oder zumindest im Wesentlichen erhalten.

Durch den Erhalt der kraftschlüssigen Verbindung wird der Gurt vorteilhaft geschont und Materialabrieb wird vermindert.

Insbesondere wird vorteilhaft der Schlupf zwischen der jeweiligen Mantelfläche und dem Gurt durch die kraftschlüssige Verbindung vermindert.

Bei einer weiteren vorteilhaften Ausgestaltung der Erfindung wird der jeweilige Motor auch generatorisch betrieben.

Vorteilhaft dient zumindest ein Regelkreis zur Regelung der Geschwindigkeit des jeweiligen Motors. Führt eine besondere Betriebssituation, beispielhaft ein Anhalten des Gurtes, oder die Topologie des Gurtförderers, beispielhaft ein bereichsweiser abwärts führender Verlauf, zu einer Übertragung einer Kraft auf die jeweilige Mantelfläche der Tragrolle oder der Gurttrommel, kann die überschüssige Energie mit Hilfe des Frequenzumrichters in das Versorgungsnetz zurückgespeist werden.

Überschüssige kinetische Energie entsteht insbesondere beim Verzögern des Gurtes oder beim Bremsen bzw. Not-Halt des Gurtes. Darüber hinaus erfolgt bei einem abwärts führenden Gurtförderer eine Übertragung einer Kraft auf die jeweilige Mantelfläche, sofern eine Hangabtriebskraft des Gurtes größer ist als der Laufwiderstand des Gurtes auf den Tragrollen.

In einer weiteren vorteilhaften Ausgestaltung der Erfindung wird die elektrische Energie von dem jeweiligen Motor in ein Versorgungsnetz gespeist.

Die elektrische Energie kann zeitbereichsweise in einem Zwischenkreis des Frequenzumrichters gespeichert werden.

Durch eine Abgabe der überschüssigen Energie an das Versorgungsnetz kann Energie eingespart werden.

Die Erfindung ist vorzugsweise bei Gurtförderern oder bei anderen Förderanlagen einsetzbar. Bevorzugt ist ein solcher Gurtförderer im Bereich des Bergbaus oder der Schwerindustrie einsetzbar.

Das Computerprogrammprodukt wird vorzugsweise auf einer Recheneinheit installiert, die der jeweiligen Steuereinrichtung zugeordnet ist. Zum Ablauf des Computerprogramms wird dieses in den Arbeitsspeicher der Recheneinheit geladen und von dort mit einer CPU ausgeführt. Das Computerprogramm ist vorzugsweise zur Unterstützung des hier beschriebenen Verfahrens ausgebildet.

Im Folgenden wird die Erfindung anhand von Figuren näher beschrieben und erläutert. Die einzelnen Merkmale der in den Figuren gezeigten Ausführungen lassen sich fachmännisch zu neuen Ausführungsformen kombinieren, ohne den Rahmen der Erfindung zu verlassen. Es zeigen:
- FIG 1: einen beispielhaften Gurtförderer,
- FIG 2: einen weiteren beispielhaften Gurtförderer,
- FIG 3: die Belastung des Gurtes bei einem Gurtförderer,
- FIG 4: einen beispielhaften Gurtförderer mit dezentraler Steuerung sowie
- FIG 5: einen Teil eines beispielhaften Gurtförderers.

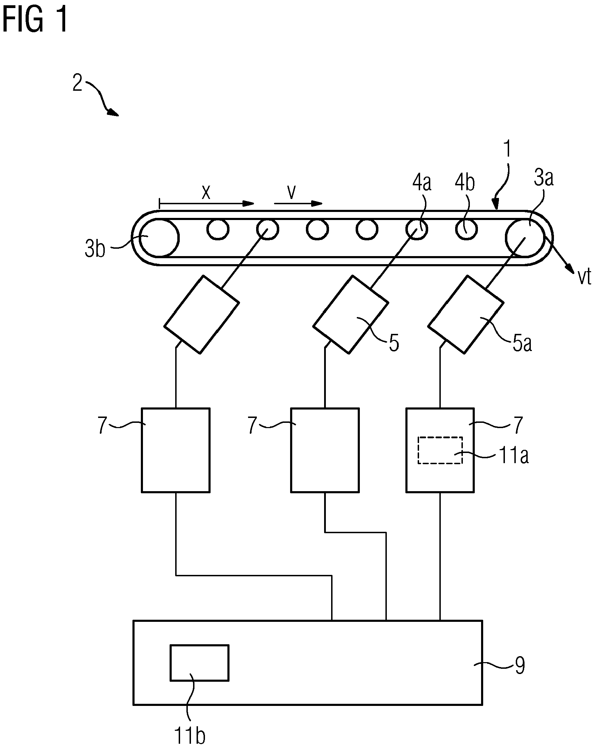

FIG 1 zeigt einen beispielhaften Gurtförderer 2. Der Gurtförderer 2 umfasst einen Gurt 1, der um zwei Gurttrommeln 3a, 3b geführt ist. Zur Unterstützung des Gurtes 1 im Obertrum sind Tragrollen 4a, 4b positioniert. Die unterhalb des Gurtes 1 angeordneten Tragrollen 4a, 4b sind zum Teil mit einem Motor 5 gekoppelt. Die angetriebenen Tragrollen 4a werden von dem jeweiligen Motor 5 angetrieben.

Darüber hinaus ist die angetriebene Gurttrommel 3a einem Motor 5a zugeordnet. Der Motor 5a für die Gurttrommel 3a ist vorzugsweise leistungsstärker ausgebildet als der jeweilige Motor 5 für die Tragrolle 4a. Hier wird der Motor 5a für die Gurttrommel 3a, 3b und der zugeordnete Frequenzumrichter 7 auch als Hauptantrieb bezeichnet. Die nicht-angetriebene Gurttrommel 3b ist keinem Motor 5 zugeordnet. Die jeweils zugeordneten Motoren 5, 5a dienen zur Drehung der jeweiligen angetriebenen Gurttrommel 3a oder der jeweiligen angetriebenen Tragrolle 4a. Die Motoren 5, 5a werden jeweils von einem Frequenzumrichter 7 mit einem Motorstrom versorgt. Der jeweilige Frequenzumrichter 7 ist mit einer Steuereinrichtung 9 verbunden. Die Steuereinrichtung 9 steuert oder regelt mit Hilfe des Frequenzumrichters 7 die Drehzahl w und/oder das jeweilige Drehmoment D des jeweiligen Motors 5, 5a. Durch den jeweiligen Motor 5 wird das Drehmoment D und/oder die Drehzahl w der jeweils angetriebenen Tragrolle 4a gesteuert oder geregelt. Mit dem Motor 5a des Hauptantriebs ist die Drehzahl w und/oder das Drehmoment der Gurttrommel 3a gesteuert oder geregelt.

Die Tragrollen 4a, 4b sind zwischen den Gurttrommeln 3a, 3b positioniert. Die Tragrollen 4a, 4b sind jeweils an einer vorgegebenen Position x des Gurtes 1 angeordnet.

Die Steuereinrichtung 9 weist einen übergeordneten Regelkreis 11b auf. Der übergeordnete Regelkreis 11a dient insbesondere zur Regelung der Geschwindigkeit v des Gurtes 1. Vorzugsweise weist der jeweilige Frequenzumrichter 7 jeweils einen antriebsnahen Regelkreis 11a auf. Der antriebsnahe Regelkreis 11a regelt vorzugsweise einen Motorstrom anhand von Vorgaben der Steuereinrichtung 9. Weiter kann der jeweilig antriebsnahe Regelkreis 11a die Drehzahl w und/oder das jeweilige Drehmoment D des jeweiligen Motors 5, 5a regeln.

Der Gurt 1 wird durch die jeweilig angetriebene Gurttrommel 3a sowie durch die jeweils angetriebene Tragrolle 4a mit einer Geschwindigkeit v bewegt. Die Geschwindigkeit v kann von der Position x auf dem Gurt 1 abhängen.

Die Gurttrommel 3a, 3b und die Tragrollen 4a, 4b weisen jeweils eine Tangentialgeschwindigkeit vt auf.

Ist die jeweilige Tangentialgeschwindigkeit vt der angetriebenen Gurttrommel 3a und/oder der angetriebenen Tragrolle 3a von der Geschwindigkeit v des Gurtes 1 unterschiedlich, wird die Drehzahl w des jeweiligen Motors nachgeregelt, bis die jeweilige Tangentialgeschwindigkeit vt der Geschwindigkeit v des Gurtes 1 entspricht.

Durch eine Regelung der Drehzahl w und somit der Tangentialgeschwindigkeit vt der Mantelfläche der jeweiligen angetriebenen Gurttrommel 3a und/oder der jeweiligen angetriebenen Tragrolle 4a besteht vorzugsweise eine kraftschlüssige Verbindung des Gurtes 1 zur jeweiligen Tragrolle 4a und/oder zur jeweiligen Gurttrommel 3a.

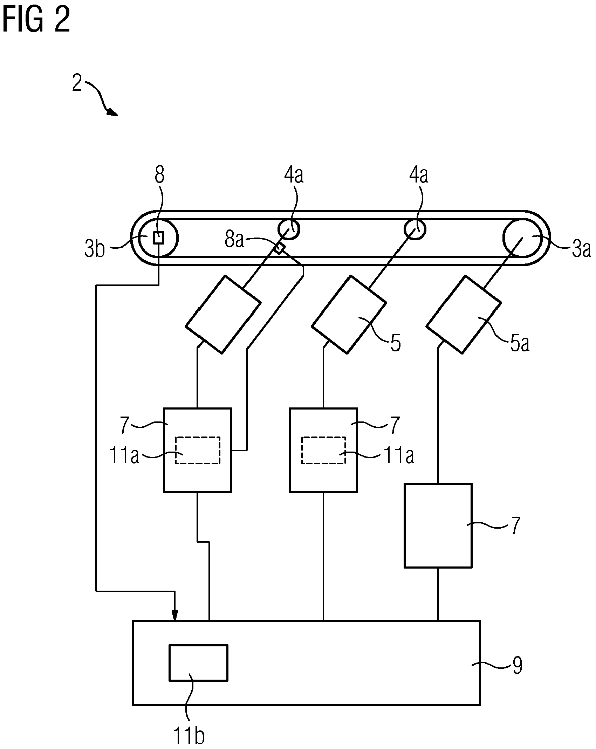

FIG 2 zeigt einen weiteren beispielhaften Gurtförderer 2. Der hier gezeigte Gurtförderer 2 ist ähnlich dem Gurtförderer 2 gemäß FIG 1 aufgebaut. Die Geschwindigkeit v des Gurtes 1 wird mit einem Geber 8 ermittelt. Der Geber 8 kann einer (nicht angetriebenen) Gurttrommel 3b, wie hier gezeigt, zugeordnet sein. Der Geber 8 kann auch dem Gurt 1 selbst zugeordnet sein und die Geschwindigkeit v des Gurtes 1 direkt bestimmen.

Der Gurt 1 wird von einer Gurttrommel 3a angetrieben, wobei die Gurttrommel 3a mit einem Motor 5a gekoppelt ist. Der Gurt 1 wird zudem von Motoren 5 angetrieben, die jeweils einer Tragrolle 4a zugeordnet sind. Die Motoren 5, 5a sind jeweils einem Frequenzumrichter 7 zugeordnet. Den Motoren 5, die jeweils einer Tragrolle 4a zugeordnet sind, sind zumindest zum Teil weitere Geber 8a zugeordnet. Der weitere Geber 8a kann auch dem Motor 5 zugeordnet sein. Der jeweilige weitere Geber 8a dient zur Bestimmung der Drehzahl w des jeweiligen Motors 5. Die Drehzahl w des jeweiligen Motors 5 oder der angetriebenen Tragrolle 4a wird dem jeweiligen Frequenzumrichter 7 bereitgestellt. Der jeweilige Frequenzumrichter 7 ist mit der Steuereinrichtung 9 verbunden. Die Steuereinrichtung 9 weist einen übergeordneten Regelkreis 11b auf. Der jeweilige Frequenzumrichter 7 weist vorteilhaft einen antriebsnahen Regelkreis 11a auf. Der antriebsnahe Regelkreis 11a dient zur Regelung der Drehzahl w der jeweiligen Motoren 5, 5a und/oder zur Regelung des jeweiligen Drehmoments D des Motors 5, 5a. Zur Steuerung oder Regelung der Motoren 5, 5a dient darüber hinaus eine Steuereinrichtung 9. Die Steuereinrichtung weist vorteilhaft ebenfalls einen Regelkreis 11b auf. Der übergeordnete Regelkreis 11b der Steuereinrichtung 9 dient vorzugsweise zur Regelung des Drehmoments D und/oder zur Regelung der Drehzahl w des Motors 5a, welcher der Gurttrommel 3a zugeordnet ist. Die Gurttrommel 3a gibt vorteilhaft die Geschwindigkeit v des Gurtes 1 vor. Somit steuert bzw. regelt die übergeordnete Steuereinrichtung 9 die Geschwindigkeit v des Gurtes 1.

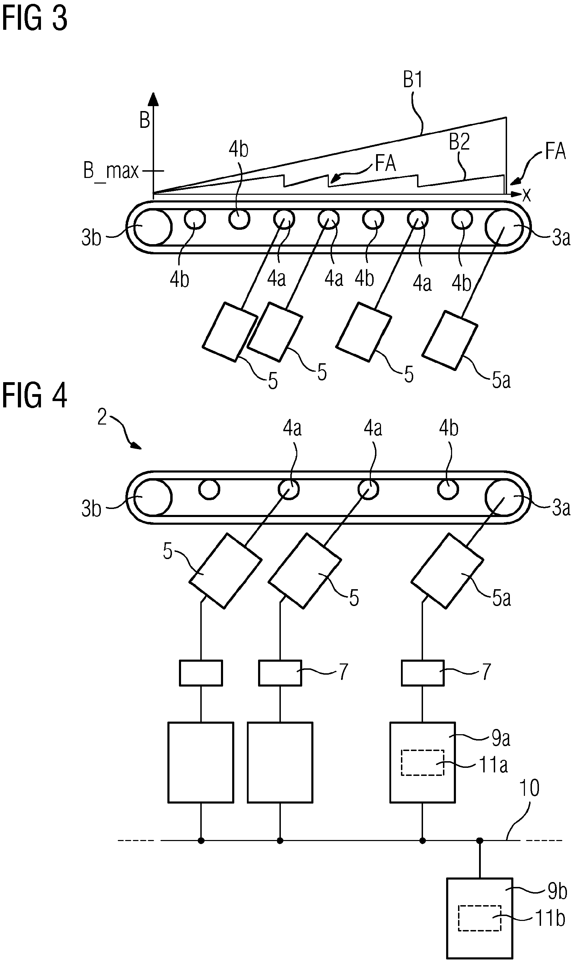

FIG 3 zeigt die Belastung B des Gurtes 1 eines Gurtförderers 2. Zur verbesserten Übersicht ist die Belastung B als Funktion der Position x des Gurtes 1 des darunter gezeigten Gurtförderers 2 dargestellt. Gezeigt sind zwei Belastungskurven B1, B2. Die dargestellte Belastung B entspricht der Zugbelastung des Gurtes 1 im Obertrum. Bei der ersten Belastungskurve B1 ist lediglich die Gurttrommel 3a mit Hilfe eines Motors 5a angetrieben. Durch die starke Zugbelastung des Gurtes 1 ergibt sich eine hohe Belastung B des Gurtes 1. Je nach Beladung des Gurtes 1 mit einem Fördergut (nicht gezeigt) steigt die erste Belastungskurve B1 zur angetriebenen Gurttrommel 3a hin an.

Sind sowohl zumindest eine der Gurttrommeln 3a und ein Teil der Tragrollen 4a jeweils von einem Motor 5, 5a angetrieben, ist die Belastung B des Gurtes 1 geringer ausgeprägt. Dies ist in der zweiten Belastungskurve B2 gezeigt. Bei der zweiten Belastungskurve B2 sinkt die Belastung B des Gurtes 1 bei der Position x der jeweiligen angetriebenen Tragrolle 4a. Die Belastung B der zweiten Belastungskurve B2 bleibt vorzugsweise unterhalb einer Maximalbelastung B_max.

Durch den Antrieb der Tragrollen 5 erfolgt ein Kraftübertrag FA auf den Gurt. Der Kraftübertrag FA senkt die Belastung B des Gurtes 1 um die Zugbelastung, welche die Tragrolle 4a auf den Gurt 1 beaufschlagt.

Die Belastungskurve B1 ändert sich jeweils um den vom Motor geleisteten Kraftübertrag FA. Der Kraftübertrag FA kann jeweils durch eine Steuerung oder Regelung des jeweiligen Drehmoments D und/oder der jeweiligen Drehzahl w jeweils verändert werden.

Vorteilhaft ist der Kraftübertrag FA, der durch die jeweilige Tragrolle 4a auf den Gurt 1 beaufschlagt wird, gleich groß. Vorzugsweise erfolgt die Regelung des jeweiligen Drehmoments D und/oder der jeweiligen Drehzahl w derart, dass die Fläche unter der zweiten Belastungskurve B2 möglichst gering ist.

Vorzugsweise kann der Regelkreis 11a, 11b so eingestellt sein, dass die Belastung B des Gurtes 1 unterhalb einer einstellbaren Maximalbelastung bleibt.

FIG 4 zeigt einen beispielhaften Gurtförderer 2 mit dezentraler Steuerung. Der Gurtförderer 2 ist ähnlich zu den anderen gezeigten Gurtförderern 2 ausgeführt.

Kennzeichnend für den hier gezeigten Gurtförderer 2 ist es, dass dem jeweiligen Motor 5, 5a jeweils eine antriebsnahe Steuereinrichtung 9a zugeordnet ist. Der jeweiligen antriebsnahen Steuereinrichtung 9a ist jeweils ein Frequenzumrichter 7 zugeordnet. Die antriebsnahe Steuereinrichtung 9a dient zur Steuerung oder Regelung der jeweiligen Drehzahl w und/oder des jeweiligen Drehmoments D des jeweiligen Motors 5, 5a.

Die antriebsnahe Steuereinrichtung 9a weist hier jeweils einen antriebsnahen Regelkreis 11a auf. Ergänzend oder alternativ kann auch der jeweilige Frequenzumrichter 7 einen antriebsnahen Regelkreis 11a umfassen.

Die jeweilige Steuereinrichtung 9a ist mit jeweils anderen Steuereinrichtungen 9a über eine technische Datenverbindung 10 verbunden. Die technische Datenverbindung 10 ist vorzugsweise als industrielle Netzwerkverbindung wie PROFINET oder EtherCAT ausgeführt.

Optional weist die hier gezeigte Ausführung eine übergeordnete Steuereinrichtung 9b auf.

Vorzugsweise steuert oder regelt die übergeordnete Steuereinrichtung 9b die Geschwindigkeit v des Gurtes 1. Darüber hinaus kann das Drehmoment D des jeweiligen Motors 5 derart gesteuert oder geregelt sein, dass eine kraftschlüssige Verbindung zwischen der jeweiligen Mantelfläche der jeweiligen Tragrolle 4a und des Gurtes 1 besteht. Vorzugsweise steuern die Steuereinrichtungen 9a, 9b das Zusammenwirken der Motoren 5, 5a, welche jeweils den Tragrollen 4a oder der Gurttrommel 3a zugeordnet sind.

Vorzugsweise steuert oder regelt die übergeordnete Steuereinrichtung 9b die jeweilige antriebsnahe Steuereinrichtung 9a.

Vorteilhaft weist die optionale übergeordnete Steuereinrichtung 9b einen übergeordneten Regelkreis 11b auf. Der übergeordnete Regelkreis 11b dient vorzugsweise zur Regelung der Geschwindigkeit v des Gurtes 1. Die Ansteuerung des Motors 5a für die jeweilige Gurttrommel 3a kann, wie gezeigt, über eine antriebsnahe Steuereinrichtung 9a erfolgen oder durch die übergeordnete Steuereinrichtung 9b direkt.

Vorteilhaft lässt sich der Gurtförderer 2 mit weiteren Antriebseinheiten, jeweils aufweisend: einen Motor 5, einen Frequenzumrichter 7, eine Tragrolle 4a sowie eine antriebsnahe Steuereinrichtung 9a, erweitern. Hierbei weist die jeweilige Antriebseinheit einen Motor 5, einen Frequenzumrichter 7 und eine antriebsnahe Steuereinrichtung 9a auf. Vorteilhaft können mit der technischen Datenverbindung 10 weitere Antriebseinheiten zu dem Gurtförderer 2 ergänzt werden und der Gurtförderer 2 dergestalt verlängert werden.

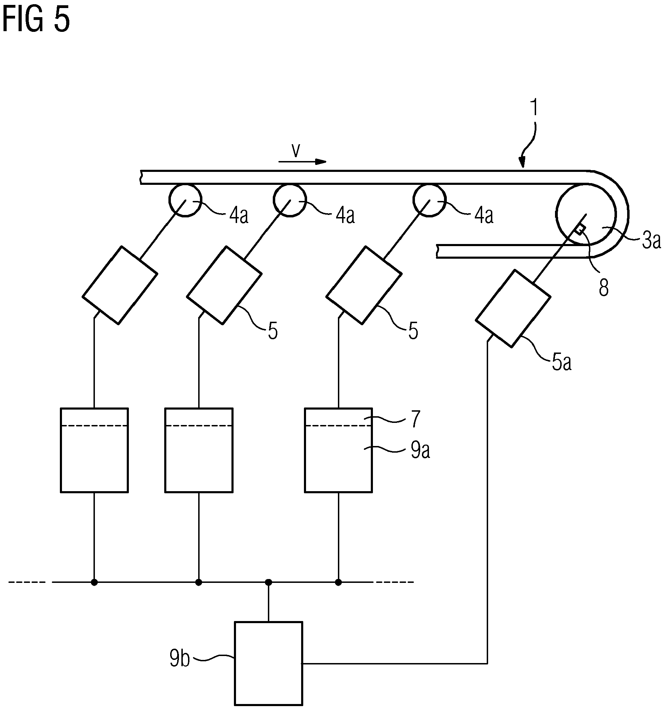

FIG 5 zeigt einen Teil eines beispielhaften Gurtförderers 2. Der Gurt 1 wird von einer Gurttrommel 3a mit einer Geschwindigkeit v bewegt. Die Gurttrommel 3a wird von einem leistungsfähigen Motor 5a angetrieben. Der Motor 5a für die Gurttrommel 3a wird direkt von der übergeordneten Steuereinrichtung 9b gesteuert oder geregelt. Der Gurttrommel 3a ist ein Geber 8 zugeordnet. Der Geber 8 dient zur Bestimmung der Geschwindigkeit v des Gurtes 1.

Die Geschwindigkeit v des Gurtes dient als Eingangsgröße für die antriebsnahen Steuereinrichtungen 9a. Den jeweiligen Steuereinrichtungen 9a ist vorzugsweise ein Frequenzumrichter 7 zugeordnet.

Die antriebsnahen Steuereinrichtungen 9a dienen jeweils zur Steuerung oder Regelung des jeweiligen Motors 5, wobei der jeweilige Motor 5 zum Antrieb der jeweiligen Tragrolle 4a dient.

Der hier beschriebene Gurtförderer, insbesondere der jeweils in den Figuren gezeigte Gurtförderer 2, kann einfach verlängert werden, wobei zur Schonung des Gurtes 1 weitere angetriebene Tragrollen 4a hinzugefügt werden können.

Zusammenfassend betrifft die Erfindung ein Antriebsystem für einen Gurtförderer, ein Verfahren zum Antreiben eines Gurtförderers 2 sowie einen Gurtförderer 2 mit einem solchen Antrieb. Zudem betrifft die Erfindung ein Computerprogrammprodukt und eine Steuereinrichtung 9, 9a, 9b. Der Gurtförderer 2 umfasst einen Gurt 1, der von zwei Gurttrommeln 3a, 3b und Tragrollen 4a, 4b geführt wird. Neben der jeweiligen Gurttrommel 3a, 3b werden zumindest ein Teil der Tragrollen 4a, 4b mit jeweils einem Motor 5, 5a angetrieben. Der dezentrale Antrieb des Gurtes 1 senkt dessen Belastung B. Der jeweilige Motor 5 dient zur Bewegung des Gurtes 1, wobei der jeweilige Motor 5, 5a jeweils eine Drehzahl w und ein Drehmoment D zum Antrieb des Gurtes 1 auf den Gurt 1 übertragen. Durch eine Regelung der jeweiligen Drehzahl w und/oder des jeweiligen Drehmomentes D kann die Belastung B des Gurtes 1 weiter reduziert werden. Vorzugsweise dient eine kraftschlüssige Verbindung des Gurtes 1 mit der jeweiligen Tragrolle 4a und/oder jeweiligen Gurttrommel 3a zum Übertrag von kinetischer Energie vom jeweiligen Motor 5 zum Gurt 1 und zurück.

## Patentansprüche

1. Antriebsystem für einen Gurtförderer (2), aufweisend eine Mehrzahl von Motoren (5, 5a) und eine Steuereinrichtung (9, 9a, 9b), wobei die Steuereinrichtung (9, 9a, 9b) zur Bereitstellung von jeweils einer Drehzahl (w) und/oder jeweils einem Drehmoment (D) für den jeweiligen Motor (5, 5a) ausgebildet ist, wobei der jeweilige Motor (5, 5a) zur Drehung einer angetriebenen Gurttrommel (3a) oder einer angetriebenen Tragrolle (4a) und somit zum Antrieb des Gurtes (1) mit einer Geschwindigkeit (v) vorgesehen ist, wobei die Steuereinrichtung (9, 9a, 9b) zur Steuerung oder Regelung des jeweiligen Drehmoments (D) und/oder der jeweiligen Drehzahl (w) des jeweiligen Motors (5, 5a) derart ausgebildet ist,
- dass eine Tangentialgeschwindigkeit (vt) der jeweilig angetriebenen Tragrolle (4a) und/oder der jeweilig angetriebenen Gurttrommel (4b) der Geschwindigkeit (v) des Gurtes (1) der Position (x) entspricht, bei welcher Position (x) die jeweils angetriebene Gurttrommel (3a) oder die jeweils angetriebene Tragrolle (4a) den Gurt (1) beaufschlagen
- und/oder dass zwischen der jeweilig angetriebenen Tragrolle (4a) und/oder der jeweilig angetriebenen Gurttrommel (3a) und dem Gurt (1) eine kraftschlüssige Verbindung besteht.

2. Antriebsystem nach Anspruch 1, wobei zumindest ein Geber (8) zur Bestimmung der Geschwindigkeit (v) des Gurtes (1) und/oder zumindest ein weiterer Geber (8a) zur Bestimmung der jeweiligen Tangentialgeschwindigkeit (vt) oder der jeweiligen Drehzahl (w) der jeweiligen Tragrolle (4a, 4b) dienen.

3. Antrieb nach einem der vorangehenden Ansprüche, wobei zumindest ein Regelkreis (11a, 11b) die Drehzahl (w) und/oder das Drehmoment (D) des jeweiligen Motors (5, 5a) derart regelt, dass eine Belastung (B) des Gurtes (1) unterhalb einer Maximalbelastung (B_max) bleibt.

4. Antriebsystem nach einem der vorangehenden Ansprüche, wobei die jeweilige Gurttrommel (3a, 3b) zur Vorgabe der Geschwindigkeit (v) des Gurtes (1) dient.

5. Antriebsystem nach einem der vorangehenden Ansprüche, wobei zwischen dem jeweiligen Motor (5) und der jeweiligen Tragrolle (4a) und/oder der jeweiligen Gurttrommel (3a) ein Drehmomentwandler, insbesondere ein Getriebe, angeordnet ist.

6. Antriebsystem nach einem der vorangehenden Ansprüche, aufweisend eine Mehrzahl von Steuereinrichtungen (9, 9a, 9b), wobei die Steuereinrichtungen (9, 9a, 9b) jeweils durch eine technische Datenverbindung (1) miteinander verbunden sind.

7. Antriebsystem nach einem der vorangehenden Ansprüche, wobei die Steuereinrichtungen (9, 9a, 9b) als antriebnahe Steuereinrichtung (9a) oder als übergeordnete Steuereinrichtung (9b) ausgebildet sind, wobei die antriebsnahen Steuereinrichtungen (9a) jeweils mit der übergeordneten Steuereinrichtung (9b) wirkverbunden sind.

8. Antriebsystem nach einem der vorangehenden Ansprüche, wobei einer Mehrzahl der Motoren (5) jeweils ein Frequenzumrichter (7) zugeordnet ist.

9. Verfahren zum Antreiben eines Gurtförderers (2), wobei ein Gurt (1) von einer Mehrzahl von Motoren (5) angetrieben wird, wobei der jeweilige Motor (5, 5a) eine Gurttrommel (3a, 3b) oder eine Tragrolle (4a, 4b) antreibt und die jeweilige Tragrolle (4a, 4b) oder Gurttrommel (3a, 3b) eine Tangentialgeschwindigkeit (vt) aufweist, wobei die Drehzahl (w) und/oder das Drehmoment (D) des jeweiligen Motors (5) so gesteuert oder geregelt wird,
- dass die Tangentialgeschwindigkeit der jeweilig angetriebenen Tragrolle (4a) und/oder der jeweilig angetriebenen Gurttrommel (3a) einer Geschwindigkeit (v) des Gurtes (1) an einer Position (x) entspricht, bei dem die jeweilige Gurttrommel (3a) oder die jeweilige angetriebene Tragrolle (4a) den Gurt (1) beaufschlagen
- und/oder dass zwischen der jeweilig angetriebenen Tragrolle (4a) und/oder der jeweilig angetriebenen Gurttrommel (3a) und dem Gurt (1) eine kraftschlüssige Verbindung besteht.

10. Verfahren nach Anspruch 9, wobei die jeweils kraftschlüssige Verbindung zwischen der Gurttrommel (4a, 4b) und/oder der Tragrolle (3a, 3b) und dem Gurt (1) nach einem Beschleunigungsvorgang des Gurtes (1) erhalten bleibt.

11. Verfahren nach einem der Ansprüche 9 oder 10, wobei der jeweilige Motor (5) auch generatorisch betrieben wird.

12. Verfahren nach einem der Ansprüche 9 bis 11, wobei elektrische Energie von dem jeweiligen Motor (5) in ein Versorgungsnetz gespeist wird.

13. Gurtförderer (2), aufweisend ein Antriebsystem gemäß einem der Ansprüche 1 bis 8.

14. Computerprogrammprodukt zur Installation auf einer Recheneinheit, wobei das Computerprogrammprodukt zur Durchführung eines Verfahrens gemäß einem der Ansprüche 9 bis 12 ausgebildet ist.

15. Steuereinrichtung zur Durchführung eines Verfahrens nach einem der Ansprüche 9 bis 12.
